# EUROPEAN PATENT SPECIFICATION

(11) **EP 2 208 005 B1**
(45) Date of publication and mention of the grant of the patent: **20.09.2017**
(21) Application number: 08843262.0
(22) Date of filing: 15.10.2008
(51) Int. Cl.: F24F 7/08, F24F 13/14, F24F 11/00, F24F 11/047, F24F 12/00

(54) **VENTILATING DEVICE**
LÜFTUNGSVORRICHTUNG
DISPOSITIF DE VENTILATION

(30) Priority: 25.10.2007 KR 20070107563
(43) Date of publication of application: 21.07.2010
(73) Proprietor: Kyungdong Navien Co., Ltd., Pyungtaek-si Gyunggi-do 450-818 (KR)
(72) Inventor: PARK, Jong-chol, Daejeon 300-810 (KR)
(74) Representative: Isarpatent
(86) International application number: PCT/KR2008/006073
(87) International publication number: WO 2009/054643

(56) References cited:
- JP-A- 8 159 532
- JP-A- 2004 092 926
- JP-A- 2005 024 216
- KR-B1- 100 760 177
- US-A- 5 257 736
- US-A1- 2005 279 845

## Description

### Technical Field

The present invention relates to a ventilation device, and more particularly, to a ventilation device for controlling constant air volume in which a motorized damper is installed at an indoor air exhaust port and an outdoor air suction port, a motor revolutions per minute (RPM) signal output from a brushless DC (BLDC) motor driving an exhaust fan for exhausting indoor air and a supply fan taking in outdoor air and supplying it indoors is received and compared with a motor RPM signal of a desired air volume range to calculate whether the signals are the same, and an opening ratio of the motorized damper is adjusted.

### Background Art

In general, the content of various toxic substances and carbon dioxide in the air of closed spaces such as offices increases due to the breathing and activity of inhabitants and thus the air becomes polluted. Accordingly, a ventilation device that exhausts air from closed spaces of buildings to outside and brings in fresh air from outside to inside is used.

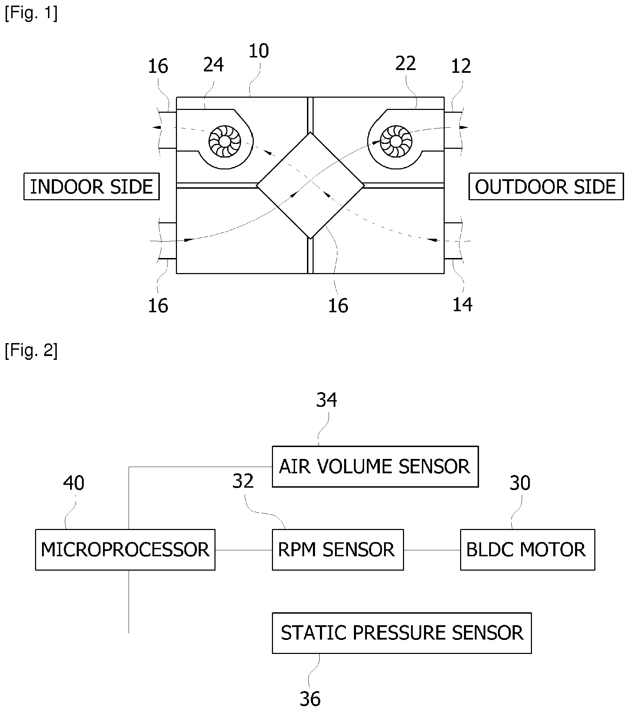

In such a conventional ventilation device, as illustrated in FIG. 1, a heat exchanger 20 is installed inside of a rectangular housing 10, an indoor air exhaust port 12 and an outdoor air suction port 14 are formed at one side of the rectangular housing 10, and an indoor air supply port 16 and an indoor air suction port 18 are formed at another side of the housing 10. On the side of the indoor air exhaust port 12, an exhaust fan 22 is installed to enable rapid exhausting of indoor air sucked through the indoor air suction port 18 after undergoing heat exchange in the heat exchanger 20. And at the outdoor air supply port 16, a supply fan 24 is installed to rapidly supply outside air that has entered through the outdoor air suction port 14 indoors. The exhaust fan 22 and the supply fan 24 are driven by a motor, and a common brushless DC (BLDC) motor is used as this motor.

In such a conventional ventilation device, the basic air volume of the ventilation de vice fluctuated due to the condition of a duct connecting indoor and outdoor upon installation or static pressure fluctuations according to conditions outdoors, so that satisfactory ventilation was not achieved. Patent document KR-A-100760177 discloses an exemplary ventilation device according to the preamble of claim 1.

To solve this problem, ventilation devices performed constant air volume control enabling a fixed air volume to be maintained.

Such a constant air volume control device, as illustrated in FIG. 2, is equipped with an RPM sensor 32 for measuring revolutions per minute (RPM) of a BLDC motor 30 driving the fans, an air volume sensor 34 for measuring air volume of the exhaust fan 22 and the supply fan 24, a static pressure sensor 36 for measuring static pressure, and a microprocessor 40 that receives signals of the RPM of the BLDC motor 30 measured by the RPM sensor 32 and the air volume and static pressure measured by the air volume sensor 34 and the static pressure sensor 36 and controls the BLDC motor 30. Here, a Hall sensor, etc. incorporated into the BLDC motor 30 is used as the RPM sensor 32.

Data related to static pressure and air volume at a supply voltage to be applied, and data regarding the relationship between RPM of the BLDC motor 30 and air volume at the supply voltage to be applied, are input to the microprocessor 40. Also, data regarding RPM of the BLDC motor 30 corresponding to a fixed air volume required by design and the supply voltage to be applied are input to the microprocessor 40. Such a microprocessor 40 receives a signal regarding the RPM of the BLDC motor 30 according to application of an initial supply voltage from the RPM sensor 32, then calculates a supply voltage corresponding to the received RPM of the BLDC motor 30 in order to implement a fixed air volume required by design, and the calculated supply voltage is applied to the BLDC motor 30

Thus, the microprocessor 40 controls operation of the BLDC motor 30 to achieve a fixed air volume output.

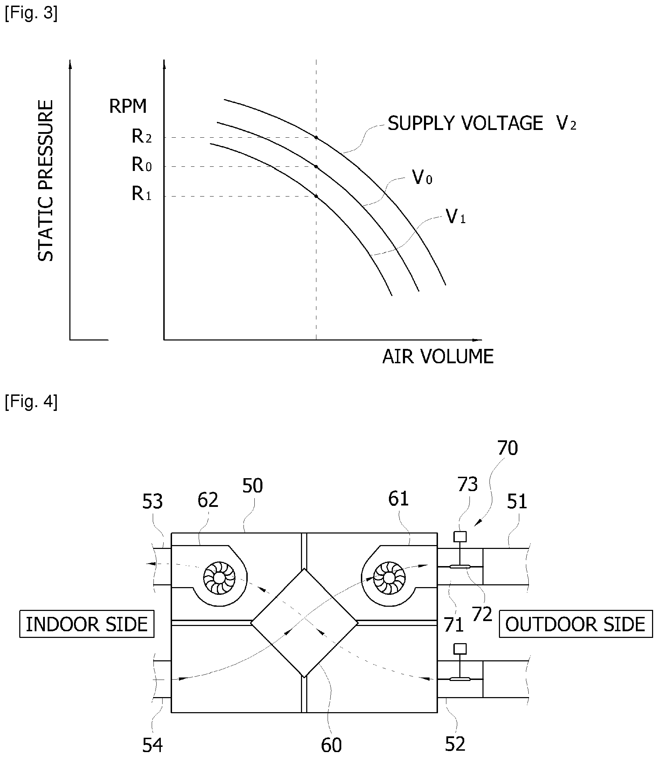

FIG. 3 is curves showing the relationships among static pressure, RPM of the BLDC motor 30 and air volume according to applied supply voltage. According to FIG. 3, it can be seen that static pressure and air volume are inversely proportional. That is, it shows that output air volume decreases as static pressure increases. In addition, it can be seen that even if static pressure increases, it is necessary to increase supply voltage and raise the RPM of the BLDC motor 30 in order to maintain a fixed air volume.

Here, static pressure should be understood as a load (resistance) applied to an impeller, and the relationships between such static pressure and RPM and air volume can be said to be an intrinsic characteristic which depends on impeller shape. That is, even at the same supply voltage, when static pressure is low, a small load is applied to the impeller and output air volume is increased, and when static pressure is high, a large load is applied to the impeller and output air volume is reduced.

In the microprocessor 40, as illustrated in FIG. 3, all data regarding the relationships among static pressure, RPM of the BLDC motor 30 and air volume according to applied supply voltage are input, and in order to maintain a fixed air volume regardless of static pressure, data regarding a selected supply voltage and RPM of the BLDC motor 30 are also input. That is, data regarding a supply voltage and RPM of the BLDC motor 30 for a fixed air volume required by a designer are input as basic values.

A constant air volume control method of the conventional ventilation device will be briefly described below.

When power is applied to the exhaust fan 22 and the supply fan 24, an initial supply voltage V0 input to the microprocessor 40 in advance is applied to the BLDC motor 30. At this time, the RPM sensor 32 measures RPM R of the BLDC motor 30 in response to the initial supply voltage V0.

Here, if the measured RPM R of the BLDC motor 30 is the same as RPM R0 of the BLDC motor 30 in response to the initial supply voltage input to the microprocessor 40 in advance, the air volume required by design is output and the applied initial supply voltage V0 is maintained.

Also, if the measured RPM R of the BLDC motor 30 is smaller than the RPM R0 of the BLDC motor 30 in response to the initial supply voltage input to the microprocessor 40 in advance, the air volume required by design is not output and a supply voltage V1 corresponding to RPM R1 input to the microprocessor 40 in advance is applied.

Also, if the measured RPM R of the BLDC motor 30 is larger than the RPM R0 of the BLDC motor 30 in response to the initial supply voltage input to the microprocessor 40 in advance, the air volume required by design is not output and a supply voltage V2 corresponding to RPM R2 input to the microprocessor 40 in advance is applied.

When the RPM R1 or R2 of the BLDC motor 30 is small or large and the newly supplied voltage V1 or V2 is applied to the BLDC motor 30 as above, the RPM sensor 32 again measures the RPM of the BLDC motor 30, and it is determined whether the measured RPM of the BLDC motor 30 correspond to the RPM R1 or R2 input to the microprocessor 40 in advance.

At this time, if the measured RPM of the BLDC motor 30 is the same as the RPM R1 or R2 input in advance, the newly supplied voltage V1 or V2 is maintained. If they are not the same, the process of applying the supply voltage corresponding to the measured RPM to the BLDC motor 30 is repeated.

The conventional ventilation device in which constant air volume is controlled through the above process must be equipped with the RPM sensor 32, the air volume sensor 34, the static pressure sensor 36, the microprocessor 40 which controls the BLDC motor 30 by the voltage applied to the BLDC motor 30, etc., in order to perform constant air volume control. There is a problem in that the reliability of constant air volume control deteriorates according to the quality of the air volume sensor 34 and the static pressure sensor 36. Thus, there is a problem in that in order to improve the reliability of air volume control, only expensive air volume sensors and static pressure sensors have to be used.

### Disclosure of Invention

### Technical Problem

The present invention, conceived in order to solve various problems such as those above, aims at providing a ventilation device in which constant air volume control is accomplished by installing a motorized damper at an indoor air exhaust port and an outdoor air suction port and adjusting an opening ratio of an opening of the motorized damper according to RPM of a motor so that a fixed air volume can be obtained regardless of static pressure variation without additional pressure and air volume sensors.

### Technical Solution

A ventilation device according to the present invention is equipped with a housing, a heat exchanger installed in the middle of the inside of the housing, an indoor air exhaust port and an outdoor air suction port formed at one side of the housing based on the heat exchanger, an indoor air suction port and an outdoor air supply port formed at another side of the housing, an exhaust fan installed at one side of the interior of the housing for exhausting indoor air through the indoor air exhaust port to outside, a supply fan installed at another side of the interior of the housing for sucking outdoor air from outside and sending the outdoor air to the outdoor air supply port, and a brushless DC (BLDC) motor for driving the exhaust fan and the supply fan, and is characterized by comprising a motorized damper installed at each of the indoor air exhaust port and the outdoor air suction port for adjusting the amount of indoor air exhausted by the exhaust fan and the amount of outdoor air sucked by the supply fan; an RPM sensor embedded in the BLDC motor to measure revolutions per minute (RPM); and a microprocessor configured to receive a signal regarding the RPM of the BLDC motor measured by the RPM sensor and adjust an opening ratio of the motorized damper.

The microprocessor in the ventilation device according to the present invention may receive data about the RPM of the BLDC motor corresponding to air volume that can be set by a user in the ventilation device and data about the opening ratio of the motorized damper corresponding to the air volume that can be set by the user in the ventilation device, receive the signal regarding the RPM of the BLDC motor from the RPM sensor after operation of the ventilation device and compare the RPM with preset RPM of the BLDC motor, and control the motorized damper to adjust the opening ratio of the motorized damper.

The microprocessor in the ventilation device according to the present invention may determine whether outside static pressure increased and control the motorized damper such that the opening ratio of the motorized damper widens when the RPM of the BLDC motor received from the RPM sensor after operation of the ventilation device is larger than the preset RPM of the BLDC motor, and determine whether outside static pressure decreased and control the motorized damper such that the opening ratio of the motorized damper narrows when the RPM of the BLDC motor received from the RPM sensor after operation of the ventilation device is smaller than the preset RPM of the BLDC motor.

In the ventilation device according to the present invention, an AC motor may be connected to the exhaust fan and the supply fan and driven, a separate RPM sensor may be installed at the AC motor, the microprocessor may be connected to the RPM sensor, and the microprocessor may receive a signal regarding the RPM of the BLDC motor measured by the RPM sensor and adjust the opening ratio of the motorized damper.

### Advantageous Effects

According to the present invention, since constant air volume control is performed by adjusting the opening ratio of the motorized damper depending on the RPM of the BLDC motor of the exhaust fan and the supply fan at the indoor air exhaust port and the outdoor air supply port, a fixed air volume can be output regardless of static pressure variation without additional pressure sensors.

### Brief Description of the Drawings

FIG. 1 is a diagram schematically showing the constitution of a conventional ventilation device;
FIG. 2 is a block diagram of a control part of the conventional ventilation device;
FIG. 3 is a graph showing relationships between static pressure, air volume, and motor RPM in a conventional ventilation device;
FIG. 4 is diagram schematically showing the constitution of a ventilation device according to one example embodiment of the present invention;
FIG. 5 is a block diagram of a control part of the ventilation device according to one example embodiment of the present invention; and
FIG. 6 is a graph showing relationships between static pressure and air volume of a normal ventilation device and of a ventilation device having a constant air volume characteristic.

### Mode for the Invention

Hereinafter, exemplary embodiments of the present invention will be described in detail. However, the present invention is not limited to the exemplary embodiments disclosed below, but can be implemented in various forms. The exemplary embodiments are described so that this disclosure will enable those of ordinary skill in the art to which the invention pertains to embody and practice the invention.

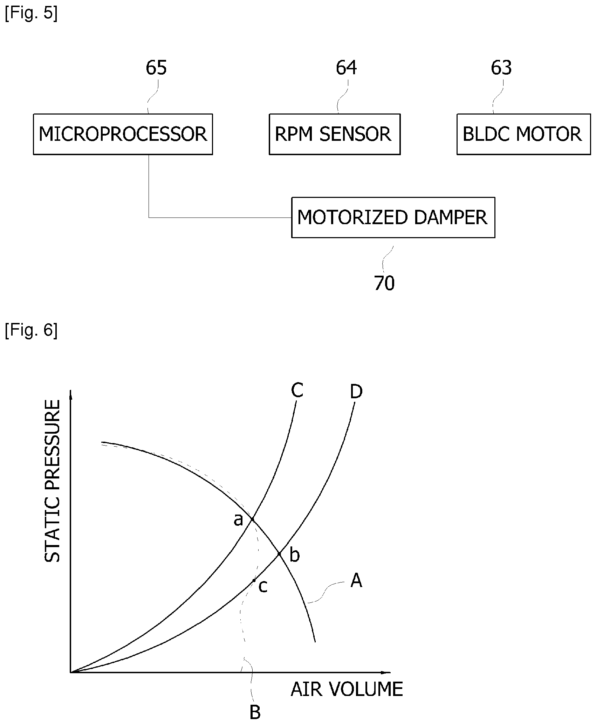

FIG. 4 is diagram schematically showing the constitution of a ventilation device according to one example embodiment of the present invention, FIG. 5 is a block diagram of a control part of the ventilation device according to one example embodiment of the present invention, and FIG. 6 is a graph showing relationships between static pressure and air volume of a normal ventilation device and of a ventilation device having a constant air volume characteristic.

As illustrated in FIG. 4, a heat exchanger 60 is installed in the middle of the inside of a rectangular housing 50, an indoor air exhaust port 51 and an outdoor air suction port 52 are formed at one side of the housing 50 based on the heat exchanger 60, and an outdoor air supply port 53 and an indoor air suction port 54 are formed at another side of the housing 50 based on the heat exchanger 60.

An exhaust fan 61 is installed at the indoor air exhaust port 51 side of the interior of the housing 50 for sucking indoor air from the indoor air suction port 54 and exhausting it through the indoor air exhaust port 51 to outdoors. Also, a supply fan 62 is installed at the outdoor air supply port 53 side of the interior of the housing for sucking outdoor air from the outdoor air suction port 52 and supplying it through the outdoor air supply port 53 to indoors.

A motorized damper 70 is installed at the indoor air exhaust port 52 for adjusting the amount of indoor air exhausted by the exhaust fan 61, and the motorized damper is also installed at the outdoor air suction port 52 for adjusting the amount of outdoor air supplied from outdoors by the supply fan 62.

The exhaust fan 61 and the supply fan 62 are driven by a brushless DC (BLDC) motor 63. Also, an RPM sensor 64 is generally included in the BLDC motor 63 for measuring RPM. A Hall sensor or photo sensor is usually used as the RPM sensor 64. Also, the RPM sensor 64 is connected to a microprocessor 65.

The motorized damper 70 is connected to the microprocessor 65 and its opening ratio is controlled according to RPM of the BLDC motor 63 measured by the RPM sensor 64.

Here, the motorized damper 70 includes a motorized damper body 71, a damper 72 for partially blocking a passage of the indoor air exhaust port 51 and the outdoor air suction port 52 while rotating, and an actuator 73 operated by the microprocessor 65 for rotating the damper 72.

Also, data about RPM of the BLDC motor 63 required for air volumes that can be set by a user in the ventilation device, and data about the opening ratio of the motorized damper 70 corresponding to air volumes that can be set by a user in the ventilation device, are input to the microprocessor 65. Also, the microprocessor 65 receives a signal about RPM of the BLDC motor 63 from the RPM sensor 64 after operation of the ventilation device and compares it with preset RPM of the BLDC motor 63 to adjust of the opening ratio of the motorized damper 70.

This will be explained more simply below.

When a user operates the ventilation device, an operation state is set and the device operates. For example, the air volume of the ventilation device is chosen as one of strong, medium and weak and the ventilation device operates. Here, RPM of the BLDC motor 63 corresponding to strong air volume, RPM of the BLDC motor 63 corresponding to medium air volume, and RPM of the BLDC motor 63 corresponding to weak air volume have been input to the microprocessor 65.

Also, an opening ratio of the motorized damper corresponding to strong air volume, an opening ratio of the motorized damper corresponding to medium air volume, and an opening ratio of the motorized damper corresponding to weak air volume have been input to the microprocessor 65.

If a user sets the ventilation device air volume to medium and operates the ventilation device, the exhaust fan 61 and the supply fan 62 of the ventilation device operate, the BLDC motor 63 of the exhaust fan 61 and the supply fan 62 runs, and the motorized damper 70 also operates in a completely open state. At this time, the RPM sensor 64 measures RPM R1 of the BLDC motor 63 and sends the measured RPM to the microprocessor 65, and the microprocessor 65 determines whether the RPM R1 of the BLDC motor 63 received from the RPM sensor 64 and RPM Rm of the BLDC motor input in advance corresponding to medium air volume are the same.

Then, if the RPM R1 of the BLDC motor 63 input from the RPM sensor 64 and the RPM Rm of the BLDC motor corresponding to medium ventilation device air volume are the same, the microprocessor 65 determines that the opening ratio of the operating motorized damper and the opening ratio of the motorized damper corresponding to medium ventilation device air volume are the same and suspends operation of the motorized damper 70.

Meanwhile, if the RPM of the BLDC motor 63 strays from a fixed range, i.e., a range of RPM of the BLDC motor input in advance (10%) during operation of the ventilation device, it is determined as a variation in outside conditions and the opening ratio of the motorized damper is readjusted.

That is, in the event RPM R2 of the BLDC motor 63 received from the RPM sensor 64 after operation of the ventilation device is greater than the RPM Rm of the BLDC motor 63 input in advance, the microprocessor 65 determines that outside static pressure increased and controls the motorized damper 70 such that its opening ratio widens. And in the event that the RPM of the BLDC motor received from the RPM sensor 64 is smaller than the RPM of the BLDC motor input in advance, the microprocessor 65 determines that outside static pressure decreased and controls the motorized damper 70 such that its opening ratio narrows.

In addition, if operation of the ventilation device is stopped, the microprocessor 65 remembers the position of the damper of the motorized damper 70 before operation is stopped. Then, when the ventilation device is restarted, the microprocessor 65 receives the RPM of the BLDC motor 63 from the RPM sensor 64 and compares with the remembered damper position of the motorized damper 70 before operation is stopped and the opening ratio of the motorized damper 70 is adjusted.

Meanwhile, a basic brushless DC (BLDC) motor with a built-in RPM sensor such as a Hall sensor is usually used as the motor driving the exhaust fan and the supply fan in the ventilation device. However, it is possible to connect and drive an AC motor instead of the BLDC motor, install a separate RPM sensor at the AC motor, and connect the microprocessor to the RPM sensor so that the microprocessor receives a signal regarding RPM of the AC motor measured by the RPM sensor to adjust the opening ratio of the motorized damper. Thus, in the present invention, constant air volume can be controlled according to RPM of the AC motor and the opening ratio of the motorized damper.

In FIG. 6, curve A shows the relationship between pressure and air volume in a basic ventilation device, curve B shows the relationship between pressure and air volume in a ventilation device having a constant air volume characteristic, and curves C and D show the relationship between specific outside static pressures and air volume in a ventilation device. Here, curve C shows the case of a small motorized damper opening ratio and a large load, and curve D shows the case of a large motorized damper opening ratio and a small load.

As shown in the graph of FIG. 6, if outside static pressure changes from the state of curve C to the state of curve D, the air volume of the basic ventilation device rises from point a to point b, but the air volume of the ventilation device having a constant air volume characteristic changes only slightly from point a to point c. Thus, even when outside conditions vary, control of a fixed air volume is possible by adjusting the opening ratio of the motorized damper.

While the invention has been shown and described with reference to certain exemplary embodiments thereof, it will be understood by those skilled in the art that various changes in form and details may be made therein without departing from the spirit and scope of the invention as defined by the appended claims.

### Industrial Applicability

A heating system control method provided by the present invention enables uniform heating of rooms even when the amount of heat required is different for each room. Meanwhile, as a heating system control method that can reduce the number of operations of a proportional control valve, it has the advantage of industrial applicability.

## Claims

1. A ventilation device equipped with a housing, a heat exchanger installed in the middle of the inside of the housing, an indoor air exhaust port and an outdoor air suction port formed at one side of the housing based on the heat exchanger, an indoor air suction port and an outdoor air supply port formed at another side of the housing, an exhaust fan installed at one side of the interior of the housing for exhausting indoor air through the indoor air exhaust port to outside, a supply fan installed at another side of the interior of the housing for sucking outdoor air from outside and sending the outdoor air to the outdoor air supply port, and a brushless DC (BLDC) motor for driving the exhaust fan and the supply fan, the ventilation device **characterized by** comprising:
a motorized damper installed at each of the indoor air exhaust port and the outdoor air suction port for adjusting the amount of indoor air exhausted by the exhaust fan and the amount of outdoor air sucked by the supply fan;
an RPM sensor embedded in the BLDC motor to measure revolutions per minute (RPM); and
a microprocessor configured to receive a signal regarding the RPM of the BLDC motor measured by the RPM sensor and adjust an opening ratio of the motorized damper.

2. The ventilation device of Claim 1, wherein the microprocessor receives data about the RPM of the BLDC motor corresponding to air volume that can be set by a user in the ventilation device and data about the opening ratio of the motorized damper corresponding to the air volume that can be set by the user in the ventilation device, receives the signal regarding the RPM of the BLDC motor from the RPM sensor after operation of the ventilation device and compares the RPM with preset RPM of the BLDC motor, and controls the motorized damper to adjust the opening ratio of the motorized damper.

3. The ventilation device of Claim 1, wherein the microprocessor determines whether outside static pressure increased and controls the motorized damper such that the opening ratio of the motorized damper widens when the RPM of the BLDC motor received from the RPM sensor after operation of the ventilation device is larger than the preset RPM of the BLDC motor, and determines whether outside static pressure decreased and controls the motorized damper such that the opening ratio of the motorized damper narrows when the RPM of the BLDC motor received from the RPM sensor after operation of the ventilation device is smaller than the preset RPM of the BLDC motor.

4. The ventilation device of Claim 1, wherein when operation of the ventilation device is stopped, the microprocessor remembers the position of a damper of the motorized damper before operation is stopped, and when the ventilation device is restarted, the microprocessor receives the RPM of the BLDC motor from the RPM sensor and then compares with the remembered damper position of the motorized damper before operation is stopped and adjusts the opening ratio of the motorized damper.

## Patentansprüche

1. Ventilationsvorrichtung, die versehen ist mit: einem Gehäuse, einem Wärmetauscher, der in der Mitte des Gehäuseinneren installiert ist, einer Innen-Luftausstoßöffnung und einer Außen-Luftansaugöffnung, die in Abhängigkeit von dem Wärmetauscher an einer Seite des Gehäuses ausgebildet sind, einer Innen-Luftansaugöffnung und einer Außen-Luftzufuhröffnung, die auf der anderen Seite des Gehäuses ausgebildet sind, einem Abzugsgebläse, das an einer Seite des Gehäuseinneren installiert ist, um Innenluft durch die Innen-Luftausstoßöffnung nach draußen zu entlüften, ein Zufuhrgebläse, das an einer anderen Seite des Gehäuseinneren installiert ist, zum Ansaugen von Außenluft von draußen und Weiterleiten der Außenluft zu der Außen-Luftzufuhröffnung, und einem bürstenlosen Gleichstrom (BLDC)-Motor zum Antreiben des Abzugsgebläses und des Zufuhrgebläses, wobei die Ventilationsvorrichtung **dadurch gekennzeichnet ist, dass** sie Folgendes umfasst:
eine motorgetriebene Drossel, welche sowohl an der Innen-Luftausstoßöffnung als auch an der Außen-Luftansaugöffnung installiert ist, zum Einstellen der Menge der durch das Abzugsgebläse ausgestoßenen Innenluft und der Menge der durch das Zufuhrgebläse angesaugten Außenluft;
einen U/min-Sensor, der in den BLDC-Motor eingebettet ist, zum Messen der Umdrehungen pro Minute (U/min); und
einen Mikroprozessor, der dafür ausgebildet ist, ein Signal bezüglich der durch den U/min-Sensor gemessenen U/min des BLDC-Motors zu empfangen und ein Öffnungsverhältnis der motorgetriebenen Drossel einzustellen.

2. Ventilationsvorrichtung nach Anspruch 1, wobei der Mikroprozessor Daten über die U/min des BLDC-Motors empfängt, die einem Luftvolumen entsprechen, das durch einen Nutzer in der Ventilationsvorrichtung eingestellt werden kann, sowie Daten über das Öffnungsverhältnis der motorgetriebenen Drossel empfängt, die dem Luftvolumen entsprechen, das durch den Nutzer in der Ventilationsvorrichtung eingestellt werden kann, das Signal bezüglich der U/min des BLDC-Motors von dem U/min-Sensor nach dem Betrieb der Ventilationsvorrichtung empfängt und die U/min mit voreingestellten U/min des BLDC-Motors vergleicht, und die motorgetriebene Drossel steuert, um das Öffnungsverhältnis der motorgetriebenen Drossel einzustellen.

3. Ventilationsvorrichtung nach Anspruch 1, wobei der Mikroprozessor bestimmt, ob der statische Außendruck zugenommen hat, und die motorgetriebene Drossel so steuert, dass das Öffnungsverhältnis der motorgetriebenen Drossel sich verbreitert, wenn die nach dem Betrieb der Ventilationsvorrichtung von dem U/min-Sensor empfangenen U/min des BLDC-Motors größer sind als die voreingestellten U/min des BLDC-Motors, und bestimmt, ob der statische Außendruck abgenommen hat, und die motorgetriebene Drossel so steuert, dass das Öffnungsverhältnis der motorgetriebene Drossel schmaler wird, wenn die nach dem Betrieb der Ventilationsvorrichtung von dem U/min-Sensor empfangenen U/min des BLDC-Motors kleiner sind als die voreingestellten U/min des BLDC-Motors.

4. Ventilationsvorrichtung nach Anspruch 1, wobei, wenn der Betrieb der Ventilationsvorrichtung gestoppt wird, der Mikroprozessor sich die Position einer Drosselklappe der motorgetriebenen Drossel merkt, bevor der Betrieb gestoppt wird, und wenn die Ventilationsvorrichtung neu gestartet wird, der Mikroprozessor die U/min des BLDC-Motors von dem U/min-Sensor empfängt und dann mit der gemerkten Drosselklappenposition der motorgetriebenen Drossel vergleicht, bevor der Betrieb gestoppt wird, und das Öffnungsverhältnis der motorgetriebenen Drossel einstellt.

## Revendications

1. Dispositif de ventilation pourvu d'un logement, d'un échangeur de chaleur installé en partie médiane à l'intérieur du logement, d'un orifice d'évacuation d'air intérieur et d'un orifice d'aspiration d'air extérieur formés d'un côté du logement en fonction de l'échangeur de chaleur, d'un orifice d'aspiration d'air intérieur et d'un orifice d'alimentation en air extérieur formés d'un autre côté du logement, d'un ventilateur d'extraction installé d'un côté à l'intérieur du logement pour évacuer l'air intérieur vers l'extérieur, à travers l'orifice évacuation d'air intérieur, d'un ventilateur d'aspiration installé d'un autre côté à l'intérieur du logement pour aspirer l'air extérieur depuis l'extérieur et envoyer l'air extérieur vers l'orifice d'alimentation en air extérieur, et d'un moteur à courant continu sans balais (*BLDC*, *brushless DC motor)* destiné à entraîner le ventilateur d'extraction et le ventilateur d'aspiration, le dispositif de ventilation étant **caractérisé en ce qu'**il comprend :
un registre motorisé installé au niveau de chacun des orifices d'évacuation d'air intérieur et d'aspiration d'air extérieur pour régler la quantité d'air intérieur évacuée par le ventilateur d'extraction et la quantité d'air extérieur aspirée par le ventilateur d'aspiration ;
un capteur de régime intégré au moteur BLDC pour mesurer les tours par minute (régime) ; et
un microprocesseur conçu pour recevoir un signal concernant le régime du moteur BLDC, mesuré par le capteur de régime, et régler un rapport d'ouverture du registre motorisé.

2. Dispositif de ventilation selon la revendication 1, dans lequel le microprocesseur reçoit des données au sujet du régime du moteur BLDC correspondant à un volume d'air qui peut être réglé par un utilisateur dans le dispositif de ventilation, et des données au sujet du rapport d'ouverture du registre motorisé correspondant au volume d'air qui peut être réglé par l'utilisateur dans le dispositif de ventilation, reçoit le signal concernant le régime du moteur BLDC en provenance du capteur de régime après fonctionnement du dispositif de ventilation et compare le régime à un régime préétabli du moteur BLDC, et commande le registre motorisé pour régler le rapport d'ouverture du registre motorisé.

3. Dispositif de ventilation selon la revendication 1, dans lequel le microprocesseur détermine si la pression statique extérieure a augmenté et commande le registre motorisé de manière que le rapport d'ouverture du registre motorisé s'accroisse lorsque le régime du moteur BLDC reçu en provenance du capteur de régime après fonctionnement du dispositif de ventilation est supérieur au régime préétabli du moteur BLDC, et détermine si la pression statique extérieure a diminué et commande le registre motorisé de manière que le rapport d'ouverture du registre motorisé se réduise lorsque que le régime du moteur BLDC reçu en provenance du capteur de régime après fonctionnement du dispositif de ventilation est inférieur au régime préétabli du moteur BLDC.

4. Dispositif de ventilation selon la revendication 1, dans lequel lorsque le fonctionnement du dispositif de ventilation est arrêté, le microprocesseur mémorise la position d'un registre du registre motorisé avant que le fonctionnement n'ait été arrêté, et lorsque le dispositif de ventilation est redémarré, le microprocesseur reçoit le régime du moteur BLDC en provenance du capteur de régime, puis le compare à la position de registre mémorisée du registre motorisé avant que le fonctionnement n'ait été arrêté et règle le rapport d'ouverture du registre motorisé.
